(19) Europäisches Patentamt
European Patent Office
Office européen des brevets

(11) **EP 3 280 089 B1**

(12) **FASCICULE DE BREVET EUROPEEN**

(45) Date de publication et mention
de la délivrance du brevet:
**09.03.2022 Bulletin 2022/10**

(21) Numéro de dépôt: **17184957.3**

(22) Date de dépôt: **04.08.2017**

(51) Classification Internationale des Brevets (IPC):
**H04L 9/08** (2006.01) **H04L 9/32** (2006.01)
**G06F 21/32** (2013.01) **H04L 29/06** (2006.01)

(52) Classification Coopérative des Brevets (CPC):
**H04L 63/0861; G06F 21/32; H04L 9/0866;**
**H04L 9/3231;** H04L 2209/34

(54) **PROCÉDÉ DE GÉNÉRATION DE CLÉ ET PROCÉDÉ DE CONTRÔLE D'ACCÈS**

SCHLÜSSELERZEUGUNGSVERFAHREN UND ZUGANGSKONTROLLVERFAHREN

KEY-GENERATION METHOD AND ACCESS-CONTROL METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.08.2016 FR 1657573**

(43) Date de publication de la demande:
**07.02.2018 Bulletin 2018/06**

(73) Titulaire: **Idemia Identity & Security France
92400 Courbevoie (FR)**

(72) Inventeurs:
• **CHABANNE, Hervé
92130 Issy-les-Moulineaux (FR)**
• **FONDEUR, Jean-Christophe
92130 Issy-les-Moulineaux (FR)**
• **BRINGER, Julien
92130 Issy-les-Moulineaux (FR)**

(74) Mandataire: **Chauvin, Karen Laurence
Idemia
2, place Samuel de Champlain
92400 Courbevoie (FR)**

(56) Documents cités:
**US-A1- 2016 164 682**

## Description

DOMAINE TECHNIQUE GENERAL

L'invention concerne le domaine de l'authentification d'un client auprès d'un serveur, par le biais d'informations biométriques, pour le contrôle d'accès du client à une ressource du serveur.

L'invention vise notamment la protection des données de références biométriques. A cette fin, l'invention concerne aussi la génération de clé cryptographique pour ladite authentification pour un contrôle d'accès.

Le client à identifier est associé à un dispositif physique, tel qu'un téléphone mobile, une tablette numérique, un ordinateur personnel. On parlera plus généralement de terminal-client.

Dans le cas de la biométrie, le terminal-client comprend des moyens d'acquisition de données biométriques (détecteur, caméra, clé USB avec capteur, capteur d'image avec module d'extraction et solution logicielle, etc.).

Il est important que la donnée biométrique de référence, par exemple une empreinte digitale, un iris d'œil, etc. ne soit pas stockée en clair au niveau du client, c'est-à-dire en local.

Pour ce faire, des techniques de cryptage connues sous le nom de cryptage biométrique (BE pour *Biometric Encryption*) sont mises en oeuvre. Nous nous référons au document [CRYBIO] qui décrit plus en détails ces aspects (les références sont données à la fin de la description).

En revanche, la donnée biométrique de référence ne doit pas non plus être transmise au serveur pour l'authentification. Cette dernière condition impose que la comparaison de la donnée biométrique acquise et de la donnée biométrique de référence soit effectuée en local.

A cause du bruit (griffures, temps, déformations, etc.), les mesures biométriques de référence et les mesures test sont différentes pour un même utilisateur. Cela dégrade les performances des systèmes de vérifications biométriques. Pour mesurer ces performances, deux taux d'erreurs sont communément utilisées.

Le FAR (*False Acceptance Rate*) est la probabilité qu'un utilisateur illégitime soit faussement accepté comme légitime.

Le FFR (*False Rejection Rate*) qui est la probabilité qu'un utilisateur légitime soit faussement rejeté.

ETAT DE L'ART

Lorsqu'un utilisateur souhaite pouvoir authentifier son terminal-client auprès d'un serveur pour accéder à une ressource du serveur, une donnée biométrique test est acquise puis est comparée à la donnée biométrique de référence. Si ces deux données sont suffisamment proches, une clé cryptographique est déverrouillée, qui permet l'authentification auprès du serveur. Aucune information biométrique n'est ainsi transmise au serveur.

Dans les méthodes de cryptage biométrique, la donnée biométrique de référence est masquée dans le terminal-client à l'aide d'un aléa et/ou de la clé cryptographique. On parle généralement de *key-binding.* On peut citer des algorithmes de *secure sketches* par exemple.

En particulier, dans le cadre de la norme FIDO, une authentification biométrique locale est réussie lorsqu'elle est suivie d'une authentification cryptographique classique auprès d'un serveur.

En revanche, à cause du FAR et comme le serveur n'authentifie le client que lorsque la clé est déverrouillée, des attaques en force brute sont possibles : une pluralité de données simulant des données biométriques sont testées en local, jusqu'à ce qu'une clé soit déverrouillée. Le document [WEAK] décrit les faiblesses des systèmes actuels.

Ces attaques ont pour objectif soit d'accéder aux informations du serveur, soit d'obtenir de l'information relative à la donnée biométrique de référence, soit encore d'obtenir la clé cryptographique associée. En effet, si l'authentification est autorisée, cela signifie que la donnée biométrique testée est proche de la donnée biométrique de référence.

Il est capital de pouvoir se prémunir contre ce type d'attaque.

Dans le cadre de l'invention, on considère que l'attaquant n'a pas accès aux détails des calculs qui sont exécutés dans le terminal-client. En revanche, il peut observer ce terminal à distance. De la sorte, les attaques par acquisition de données via une sonde magnétique à proximité du terminal-client, comme décrite dans la référence [PROBE] ne sont pas visées.

Le document US 2016/164682 A1 décrit un procédé d'enrôlement et un procédé de décodage, tous deux mis en oeuvre à l'aide d'un terminal client. Les données sauvegardées lors de l'enrôlement encodent une information concernant une donnée biométrique de référence.

PRESENTATION DE L'INVENTION

L'invention concerne un procédé de génération de clé cryptographique pour authentification d'un terminal-client auprès d'un serveur afin d'effectuer un contrôle d'accès.

Selon un aspect de l'invention, le procédé de génération d'une clé cryptographique pour la mise en oeuvre d'un procédé de contrôle d'accès à une ressource d'un serveur par un terminal-client, le procédé étant mis en oeuvre par le terminal-client, ledit terminal étant configuré pour communiquer avec le serveur, le terminal-client comprenant une mémoire dans laquelle est stockée une donnée de référence obtenue par l'application d'un procédé d'encodage à une donnée biométrique de référence et une clé cryptographique légitime permettant d'authentifier le terminal-client auprès du serveur lors d'un contrôle d'accès, la donnée de référence stockée dépendant d'un code correcteur d'erreur, le code correcteur d'erreur étant obtenu à partir de la clé cryptographique légitime, comprend les étapes suivantes:

- (E1) réception d'une donnée biométrique test,
- (E2) application d'un procédé de décodage à la donnée biométrique test et la donnée de référence stockée, ledit décodage comprenant la mise en oeuvre d'un procédé de décodage d'erreur, pour obtenir une clé cryptographique générée telle que :

    si la donnée biométrique test correspond à la donnée biométrique de référence, la clé cryptographique générée est la clé d'authentification cryptographique légitime,
    sinon, la clé cryptographique générée est une clé d'authentification cryptographique illégitime ne permettant pas l'authentification du terminal-client auprès du serveur lors d'un contrôle d'accès,
    le procédé de décodage générant ainsi une clé cryptographique quelle que soit la donnée biométrique test, et

- (E3) utilisation de la clé générée pour la mise en oeuvre d'un procédé de contrôle d'accès (F3) à une ressource du serveur par le terminal client, de sorte que les échanges d'informations entre le terminal-client et le serveur ne se font pas uniquement si la clé cryptographique légitime est générée.

Dans un mode de réalisation, le procédé comprend en outre une étape préliminaire (E0) de génération de la donnée biométrique test, soit par acquisition à l'aide de moyens d'acquisition de donnée biométrique, soit par génération numérique.

Dans un mode réalisation, le procédé d'encodage est du type « *secure sketch* », tel qu'un *Fuzzy Commitment Scheme,* ou du type *Helper Data System,* ou du type *Fuzzy Vault* par exemple avec des codes de Reed-Solomon.

Dans un mode de réalisation, le procédé de décodage d'erreur est un procédé de décodage souple, de préférence avec un nombre limité d'itération, par exemple par un nombre limite ou par un critère de qualité d'arrêt.

Dans un mode de réalisation, la clé cryptographique légitime présente un format adapté pour l'utilisation de la clé dans un protocole de contrôle d'accès par authentification mis en oeuvre entre le terminal-client et un serveur, et le procédé de décodage est adapté pour que la clé cryptographique illégitime ait le format de la clé cryptographique légitime.

Dans un mode de réalisation, le procédé de décodage et le procédé d'encodage comprennent des étapes de chiffrement et déchiffrement mielleux (*honey encryption*).

Dans un mode de réalisation, le procédé d'encodage est mis en oeuvre sur une pluralité de clés légitimes concaténées, les clés légitimes permettant d'authentifier le terminal-client auprès de plusieurs serveurs et/ou ressources respectifs lors d'un contrôle d'accès, et dans lequel le procédé de décodage permet l'obtention d'une clé générée concaténée comprenant une pluralité de clés générées concaténée entre elles, le procédé comprenant avantageusement une étape de sélection d'une des clés générées parmi la pluralité des clés générées pour son utilisation dans un procédé de contrôle d'accès au serveur et/ou une ressource associé à la clé légitime qui a permis la génération de ladite clé générée.

Dans un mode de réalisation, la correspondance entre les deux données biométriques signifie que la distance entre les deux données biométriques est inférieure à un seuil donné.

Les modes de réalisation peuvent être combinés, en fonction de la faisabilité technique.

L'invention concerne aussi un procédé de contrôle d'accès d'un terminal client à une ressource d'un serveur, à partir du procédé de génération de clé précédent.

Selon un aspect de l'invention, le procédé de contrôle d'accès d'un terminal-client à une ressource d'un serveur, comprend les étapes suivantes :

- (F1) mise en oeuvre d'un procédé de génération d'une clé cryptographique tel que décrit précédemment,
- (F2) réception par le serveur de la clé cryptographique générée ou de données dépendantes de la clé cryptographique générée,
- (F3) analyse de la clé cryptographique générée ou desdites données dépendantes de la clé cryptographique générée par le serveur :

    si la clé est une clé légitime, authentification du terminal-client auprès du serveur et accès du terminal client à la ressource du serveur,
    si la clé est une clé illégitime, échec de l'authentification du terminal-client auprès du serveur et mise en oeuvre d'un procédé (F4) d'alerte indiquant que la donnée biométrique de test ne correspond pas à la donnée biométrique de référence.

Dans un mode de réalisation, le procédé d'alerte (F5) comprend au moins une des étapes suivantes :

- stockage du nombre d'itérations de réceptions de clés illégitimes, et/ou
- envoi d'une consigne de verrouillage du terminal-client, et/ou
- authentification biaisée du terminal-client auprès du serveur, de façon à pouvoir surveiller ledit terminal-client, et/ou

- destruction des données stockées sur le terminal-client et/ou sur le serveur, et/ou,
- envoi au terminal-client d'une consigne de ré-acquisition de données biométriques test.

Dans un mode de réalisation, le procédé comprend la mise en oeuvre d'un protocole de preuve de connaissance à divulgation nulle de connaissance.

Dans un mode de réalisation, les échanges entre le terminal-client et le serveur comprennent la mise en oeuvre d'une signature électronique, tel que FIDO ou ECDSA ou encore RSA.

Dans un mode de réalisation, le procédé met en oeuvre une mise en gage selon Pedersen comprenant une phrase d'enrôlement dans laquelle

le terminal-client stocke une grandeur aléatoire r,

le terminal-client génère une mise en gage MG sous la forme $MG(r,Kl) = g^{Kl}h^r$ et l'envoie au serveur qui la stocke, où Kl est la clé légitime, et g et h sont tels que $\log_g(h)$ n'est pas connu,

et comprenant une phase de dévoilement, dans laquelle, préalablement à l'étape de transmission de la clé (E3), les sous-étape suivantes sont mises en oeuvre :

le terminal-client envoie au serveur :

$$A_1.A_2 = g^{a_1}.h^{a_2}$$

le serveur génère et envoie un aléa c au terminal-client, le terminal-client calcule

$$y_1 = a_1 + K'.c \text{ et } y_2 = a_2 + r.c$$

où K' est la clé cryptographique générée par le procédé de décodage (E2, F1) et $a_1$ et $a_2$ sont des valeurs aléatoires,

l'étape de transmission (E3) comprend l'envoi de $y_1$ et $y_2$ au serveur,

l'étape d'analyse de la clé (F3) comprend la vérification suivante :

$$g^{y_1}h^{y_2} = MG^c A_1 A_2$$

Les modes de réalisation peuvent être combinés, en fonction de la faisabilité technique.

L'invention concerne aussi une unité de calcul pouvant mettre en oeuvre les procédés de génération décrits précédemment ou une partie des procédés de contrôle d'accès décrits précédemment. Ladite unité de calcul comprend une mémoire, un calculateur et une interface de communication avec un serveur. L'unité de calcul peut être un dispositif personnel à un individu, de type téléphonie mobile, tablette numérique ou encore ordinateur personnel.

L'invention concerne aussi un produit-programme d'ordinateur comprenant des instructions pour mettre un oeuvre le procédé de génération précédent.

PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :

- la figure 1 illustre un système pour authentification d'un terminal-client auprès d'un serveur,
- la figure 2 illustre le fonctionnement général de l'invention,
- la figure 3 illustre un mode de réalisation particulier de *secure sketch,* avec un *fuzzy commitment scheme,*
- la figure 4 illustre différentes étapes d'un mode de réalisation avec une mise en gage de Pedersen.

DESCRIPTION DETAILLEE

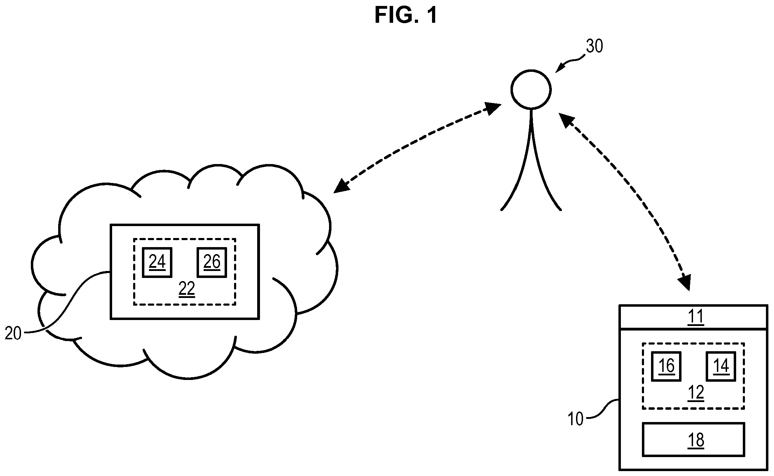

En référence à la **figure 1,** on a représenté un système permettant d'authentifier un client, représenté sous la forme d'un terminal-client 10, auprès d'un serveur 20 pour un contrôle d'accès une ressource du serveur. Par ressource, on entend des données, des applications ou encore des services du serveur 20.

Le terminal-client 10 appartient à un utilisateur dit légitime.

Le terminal-client 10 et le serveur 20 peuvent communiquer entre eux soit directement, par exemple par signal radiofréquence, soit par le biais d'un réseau 30.

Le terminal-client 10 se présente sous la forme d'un téléphone mobile performant tel qu'un *smartphone,* ou bien une tablette numérique, ou encore d'un ordinateur.

Le terminal-client 10 comprend une unité de calcul 12 dotée notamment d'une mémoire 14 et d'un calculateur 16.

Le terminal-client 10 peut soit être utilisé par un utilisateur légitime, à qui il appartient, c'est-à-dire un utilisateur non frauduleux, ou bien par un utilisateur mal intentionné, c'est-à-dire un utilisateur frauduleux. Cet utilisateur frauduleux peut soit être une personne, soit être une entité numérique.

La mémoire 14 peut être sous la forme d'une mémoire flash, ou bien d'une mémoire morte, type ROM, ou encore d'une mémoire vive RAM. La mémoire 14 peut aussi être sous la forme d'un stockage dit externe, configuré pour être connecté physiquement à l'unité de calcul 12, par exemple par un port USB.

Le calculateur 16 est un microprocesseur, un processeur, ou un microcontrôleur apte à effectuer des calculs et en particulier à mettre en oeuvre des algorithmes d'encodage ou de décodage, de type « *key binding* ». Le calculateur 16 est notamment configuré pour exécuter des lignes de codes issues d'un programme d'ordinateur.

Avantageusement, le terminal-client 10 comprend des moyens d'acquisition de données biométriques 18. Ces moyens 18 permettent d'acquérir un iris ou une empreinte digitale par exemple. On peut citer par exemple un capteur d'image couplé à un module logiciel d'extraction d'une donnée biométrique.

Les moyens d'acquisition de données biométriques 18 peuvent être intégrés au terminal-client 10 ou externes, mais connectables à ce dernier. On connait pour cela des dispositifs d'acquisition reliés en filaire à un ordinateur.

Le serveur 20 comprend lui aussi une unité de calcul 22 dotée notamment d'une mémoire 24 et d'un calculateur 26. Le serveur 20 est typiquement un serveur de *cloud,* c'est-à-dire délocalisé.

La mémoire 24 peut être sous la forme d'une mémoire flash, ou bien d'une mémoire morte, type ROM, ou encore d'une mémoire vive RAM. La mémoire 24 peut aussi être sous la forme d'un stockage dit externe, configuré pour être connecté physiquement à l'unité de calcul 22, par exemple par un port USB.

Le calculateur 26 est un microprocesseur, un processeur, ou un microcontrôleur apte à effectuer des calculs et en particulier à mettre en oeuvre des algorithmes d'authentification. Le calculateur 26 est notamment configuré pour exécuter des lignes de codes issues d'un programme d'ordinateur.

Les deux unités de traitement 12, 22 comprennent avantageusement des interfaces de communication 11, 21 à distance pour l'envoi et la réception de données, notamment par le réseau 30.

Le réseau 30 est soit un réseau internet, filaire (Ethernet) ou sans-fil (Wi-Fi), soit un réseau téléphonique GPRS, EDGE, 3G ou 4G ou autre, soit un réseau local, soit un réseau par signal radiofréquence. Les interfaces de communication 11 et 21 sont adaptées pour permettre la communication en fonction du réseau 30 concerné.

Lorsque les opérations ne nécessitent pas que les informations soient transmises entre le terminal-client 10 et le réseau 20, on parle de traitement en « local ».

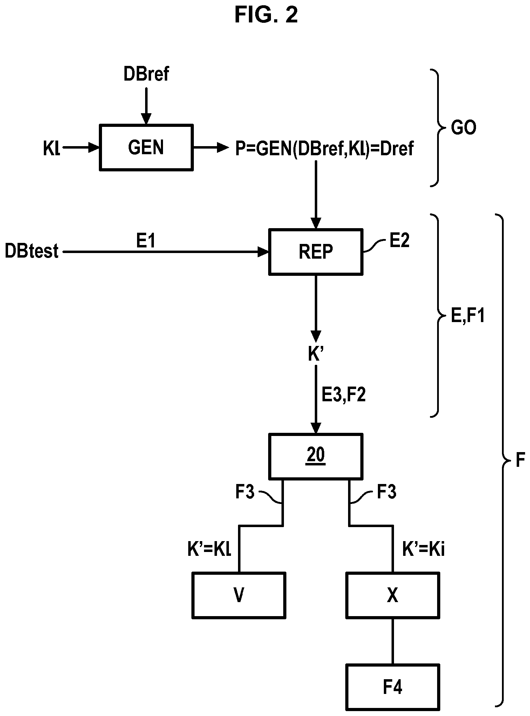

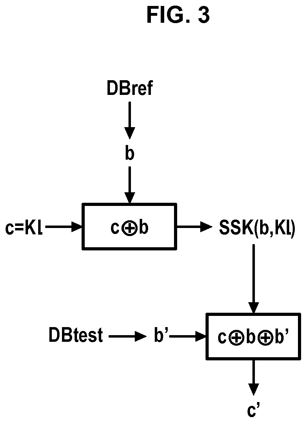

En référence aux **figures 2 et 3,** un procédé E de génération d'une clé cryptographique va être présenté. Ce procédé E vise à générer une clé cryptographique quelle que soit la donnée biométrique test DBtest entrée.

L'authentification du terminal-client 10 auprès du serveur 20 se fait grâce à une clé cryptographique légitime KI. Si le serveur reconnait cette clé, l'utilisateur est authentifié et l'accès à la ressource du serveur 20 est validé.

A l'utilisateur légitime est associée un donnée biométrique de référence DBref. Dans le cas du *key-binding,* cette donnée DBref n'est pas stockée en tant que telle dans la mémoire 14 du terminal-client 10. En effet, à l'aide d'un procédé d'encodage GEN, dit de *key-binding,* la clé cryptographique légitime KI est combinée à la donnée biométrique de référence DBref, pour générer une donnée de référence Dref, stockée dans la mémoire 14. Le procédé GEN est mis en oeuvre à partir de KI et BDref pour obtenir en sortie Dref.

Cette donnée permet donc une authentification biométrique de l'utilisateur auprès du serveur 20. Il s'agit donc bien de la biométrie de l'utilisateur qui conditionne l'authentification auprès du serveur 20 pour le contrôle d'accès.

A l'issue de ce procédé d'encodage GEN, la donnée biométrique de référence DBref et la clé cryptographique légitime KI peuvent être détruites pour ne pas être stockées en clair en local.

Le procédé d'encodage GEN est une étape préliminaire G0 à la mise en oeuvre du procédé E de génération d'une clé cryptographique qui va être décrit ci-dessous.

Dans une première étape E1, un donnée biométrique test DBtest est reçue par l'unité de calcul 12 du terminal-client 10. Comme indiqué précédemment, cette donnée biométrique BDtest est obtenue soit préalablement par les moyens d'acquisition 18, soit par une génération numérique.

Dans une deuxième étape E2, le calculateur 16 applique un procédé de décodage REP à la donnée biométrique test DBtest et la donnée de référence Rref, afin qu'il génère une clé cryptographique K' quelle que soit la donnée biométrique test BDtest.

Le procédé de décodage REP est fonctionnellement lié au procédé d'encodage GEN. Ces procédés peuvent être de type « secure sketch » comme le « *fuzzy commitment scheme* », ou encore de type « *fuzzy vault* », « *helper data system* »*,* etc. Le mode de réalisation du *fuzzy commitment scheme* sera notamment décrit par la suite.

Si la donnée biométrique test BDtest correspond à la donnée biométrique de référence BDref, la clé cryptographique K' est la clé d'authentification cryptographique légitime KI (K'=KI).

Si la donnée biométrique test BDtest ne correspond pas à la donnée biométrique de référence BDref, la clé cryptographique K' est une clé d'authentification cryptographique illégitime Ki (K'=Ki≠KI).

La correspondance entre les données biométriques peut se faire de différentes façons. On connait notamment des méthodes de mesure de distance de Hamming, ou des méthodes avec une distance statistique, ou encore des mesures de taux de similarité.

La clé illégitime Ki ne permet pas l'authentification du terminal-client 10 auprès du serveur 20.

Enfin, dans une troisième étape E3, la clé générée K', qui est soit légitime soit illégitime, est utilisée pour la mise en oeuvre d'un procédé de contrôle d'accès du terminal-client 10 auprès du serveur 20.

Dans un mode de réalisation, l'utilisation de la clé K' peut simplement consister à transmettre la clé vers le serveur 20 à l'aide de l'interface 11, pour que ce dernier mette en oeuvre un procédé de contrôle d'accès du terminal-client 10 à une ressource du serveur 20.

Dans un autre mode de réalisation, l'utilisation n'implique pas de transmission directe de la clé générée K', mais implique des opérations de preuve de connaissance, de sorte que seule une transmission d'une donnée associée à la clé est effectuée : il est ainsi possible de prévoir que la clé K' soit transmise de façon masquée. Dans ce cas, une donnée distincte de K' mais générée à partir de celle-ci est transmise par le terminal-client 10 au serveur 20. On parlera dans ce cas de données dépendantes de la clé. C'est le cas par exemple lors d'une mise en gage de Pedersen, qui sera décrite par la suite. Ce type de méthode permet une protection améliorée des données.

Ainsi, grâce à ce procédé, une clé K' est générée systématiquement, de sorte que les échanges d'informations entre le terminal-client 10 et le serveur 20 ne se font pas uniquement si la clé légitime KI est générée. Comme cela sera décrit par la suite, le serveur 20 peut alors être informé qu'un utilisateur malveillant essaie de s'authentifier frauduleusement à partir du terminal-client 10.

Avant de décrire un procédé de contrôle d'accès F du terminal-client 10 auprès du serveur 20 à l'aide de la clé générée K', différents modes de réalisation du *key-binding* et des procédés d'encodage GEN et de décodage REP vont être donnés.

Dans un mode de réalisation illustré en **figure 3,** un mode de réalisation particulier d'un *secure sketch,* le *fuzzy commitment scheme,* est utilisé, c'est-à-dire un algorithme de codage basé sur l'utilisation d'un code correcteur d'erreur. Le *fuzzy commitment scheme* est décrit dans le document [FCS], (section I.A).

Dans l'étape préliminaire G0 d'encodage, le procédé d'encodage GEN se présente sous la forme suivante :

- Binariser la donnée biométrique de référence BDref, pour obtenir une donnée b,
- A partir d'un mot c d'un code correcteur d'erreur, obtenir à partir de la référence un résultat tel que SSK = [c XOR b, h(c)], où XOR est la fonction « ou exclusif », et h est une fonction de hashage cryptographique, par exemple de type SHA-256,
- Enregistrer le résultat SSK en local. Le mot c est en fait un mot de code généré à partir de la clé cryptographique légitime KI (un mot de code est la réécriture d'un message d'origine où de la redondance a été ajoutée) et SSK est la donnée de référence DBref.

  On peut aussi stocker h(KI) à la place de h(c).

Cette étape est explicitée dans l'introduction de [FCS].

Dans l'étape E2 de décodage, le procédé de décodage REP se présente sous la forme suivante :

- binariser la donnée biométrique test DBtest, pour obtenir b',

- calculer c XOR b XOR b' à partir de la donnée SSK, pour obtenir c'.

Le mot c' est la clé cryptographique K'. Si b' et b sont suffisamment proches, on a c=c', donc K'=KI. Si b' et b ne sont pas suffisamment proches, K'=Ki.

Dans le cas d'un FCS, la notion de suffisamment proche se calcule préférablement par une distance de Hamming entre b et b' (voir introduction de [FCS]).

Dans un premier exemple, afin de s'assurer que le procédé de décodage REP génère systématiquement une clé, même si b et b' ne sont pas suffisamment proches, un procédé de décodage d'erreur, dit décodage souple (*soft decoding*) est utilisé. Ce procédé est lui aussi décrit dans [FCS], section IV.

Le principe de décodage souple est de retourner, quand cela est possible, un mot de code c' le plus vraisemblable possible, et donc avec une probabilité d'erreur. Si le procédé REP réussit à corriger toutes les erreurs, ce qui est le cas si les deux données biométriques b et b' se correspondent mutuellement suffisamment, le mot de code c' sera le même que le mot de code c.

Lorsque le procédé de décodage est itératif, un nombre maximal d'itération peut être fixé, pour limiter le temps de décodage, ou bien un critère de qualité peut être défini (fondé sur un seuil sur la probabilité d'erreur). Dans le cas d'un procédé de décodage souple comme celui dans [FCS], un mot de code c' est toujours retourné : il s'agit par exemple du mot de code le plus proche du mot « c XOR b XOR b' » suivant la distance utilisée dans l'espace des mots de code. Si le décodage souple s'est bien déroulé, on retrouve exactement la clé légitime KI. Si les itérations continuent alors que c'=c, le même mot c' sera généré à chaque itération. Une méthode pour limiter les itérations consiste par exemple à vérifier si h(K')=h(KI), avec h fonction de hachage.

Un autre exemple de décodage d'erreur pour s'assurer que le procédé de décodage REP génère systématiquement une clé serait de restreindre le mot retrouvé aux bits d'information (cela peut être fait en ne sélectionnant que les I premiers bits du mot retrouvé, si le code correcteur est de dimension I), afin de les considérer comme un message d'origine et de l'encoder en un mot de code c'.

Dans un autre mode de réalisation, une architecture de type *helper data system* est utilisée. Le *helper data system* est décrit dans le document [HDS], en section 3, et à la figure 2.

Le procédé d'encodage GEN est alors conforme au protocole décrit dans cette publication permettant de générer, à partir d'une donnée biométrique X initiale (correspondant à DBref) et d'un secret S généré aléatoirement (correspondant à KI), un doublet $(W_1, W_2)$.

Le décodage REP, peut correspondre au décodage DEC décrit dans ce document, permettant de régénérer un secret S'i (correspondant à K') à partir d'une donnée biométrique de test Y (correspondant à DBtest).

Un algorithme de décodage souple tel que décrit pour le *Fuzzy Commitment Scheme* est mis en oeuvre.

Dans un autre mode de réalisation, une architecture de type *fuzzy vault* est utilisé. Le *fuzzy vault* est décrit dans le document [FV].

Le procédé d'encodage GEN correspond à l'algorithme LOCK décrit dans la section 3 de cet article.

Le décodage REP correspond à l'algorithme UNLOCK décrit dans la section 3 de cet article, utilisant un algorithme de décodage de Reed Solomon, auquel est appliqué un procédé de décodage itératif, comme présenté dans le document [FVDEC].

Dans un autre mode de réalisation, un algorithme de type *fuzzy extractor* est utilisé. Cet algorithme est décrit dans le document [FC], section 3.2. Le décodage peut être mis en oeuvre avec par exemple un procédé de même type que le FCS ou *Fuzzy Vault,* en fonction du code sous-jacent à l'algorithme.

En outre, il existe certains protocoles qui exigent des formats de clés spécifiques. Pour que les clés K' générées soit toutes utilisables, il faut que les clés aient le bon format, c'est-à-dire que le procédé REP génère des clés dans le bon format, qui est celui de la clé légitime KI.

Les normes FIDO et ECDSA utilisent des courbes elliptiques, ce qui signifie que l'on stocke KI pour un point KIP de la courbe elliptique. Il n'y a donc pas besoin de forme particulière pour la clé cryptographique.

En revanche, dans les protocoles RSA par exemple, la clé doit avoir un format prédéterminé. Il s'agit de s'assurer que la clé K' systématiquement générée en sortie de l'étape E2 de décodage soit compatible avec ce format. Comme la clé légitime KI est choisie pour avoir ce format, on souhaite que la clé générée K' ait ce même format.

Il existe des méthodes de *honey encryption* (chiffrement mielleux), présentée dans le document [HE] qui permet de convertir la clé dans le format souhaité.

Avantageusement, le procédé comprend donc une étape supplémentaire de conversion de la clé générée K' selon un format désiré qui correspond au format de la clé légitime, au moyen d'un algorithme de chiffrement mielleux. Cet algorithme de chiffrement mielleux utilise le chiffrement de la clé légitime KI stocké en parallèle de BDref pour retrouver la clé dans le bon format. Cette étape est elle aussi mise en oeuvre par le calculateur 16.

L'étape d'encodage de la clé légitime KI comprend donc les étapes suivantes : sélection de la clé légitime KI, chiffrement (dit « mielleux ») de la clé légitime KI avec une autre clé Km (dite « mielleuse ») pour obtenir une clé légitime mielleusement chiffrée KIm, et ensuite mise en oeuvre du procédé d'encodage GEN avec la clé mielleuse Km. Sont donc stockées dans la mémoire 14 la clé légitime KI cryptée et la donnée de référence Dref obtenue avec la donnée biométrique de référence BDref et la clé mielleuse Km.

L'étape de décodage permet d'obtenir une clé générée dite mielleuse K'm. Cette clé générée mielleuse K'm est ensuite utilisée pour déchiffrer la clé légitime mielleusement chiffrée KIm. A la suite de ce déchiffrement, on obtient la clé générée K', qui vaut KI si les données biométriques DBref et DBtest sont suffisamment proches.

A partir de la clé cryptographique générée K', un procédé de contrôle d'accès F peut-être mis en oeuvre.

Dans une première étape F1, le procédé E de génération d'une clé cryptographique tel que décrit précédemment est mis en oeuvre. A l'issue de ce procédé E, la clé générée K', ou des données dépendantes de cette clé générée K', est envoyée au serveur. L'envoi peut être simple, en clair, ou de façon masquée, à l'aide notamment de preuve de connaissance, dans lequel plusieurs données dépendant de la clé sont envoyées, mais pas la clé elle-même. On peut citer la mise en gage pour l'enregistrement, comme dans le cas de Pedersen (décrit par la suite).

Dans une deuxième étape F2, la clé cryptographique K', ou bien les données dépendantes de cette clé, est reçue par l'interface de communication 21 du serveur 20.

Enfin, dans une troisième étape F3, la clé (ou les données dépendantes de la clé) reçue à l'étape précédente est analysée par le calculateur 26 du serveur 20. Comme indiqué précédemment, il est par exemple possible que la clé K' ait été transmise en clair, ou bien ait été transmise en masquée, notamment par une preuve de connaissance.

Cette étape d'analyse F3 permet d'identifier si la clé K' est la clé légitime KI, auquel cas l'utilisateur est authentifié, ou bien si la clé K' est une clé illégitime, auquel cas l'utilisateur n'est pas authentifié.

En outre, si l'authentification est un échec, un procédé F4 d'alerte est déclenché. Ce procédé F4 d'alerte indique que la donnée biométrique de test DBtest ne correspond pas à la donnée biométrique de référence BDref. Le serveur 20 possède désormais l'information qu'un utilisateur illégitime est en train de frauduleusement utilisé le terminal-client 10.

Par la suite, le procédé d'alerte F4 peut déclencher différent types d'étapes, combinables en elles et générées par le serveur 20.

Dans un mode de réalisation, le serveur 20 envoie au terminal-client 10 une consigne de ré-acquisition de la donnée biométrique test BDtest.

Dans un mode de réalisation, une variable de comptage est incrémentée par itération à chaque réception d'une clé illégitime Ki, de sorte que le serveur 20 a connaissance du nombre de tentatives d'authentification.

Dans un mode de réalisation, le serveur 20 envoie une consigne de verrouillage du terminal-client 10 au terminal-client 10, pour empêcher toute tentative de connexion. Par exemple, l'envoi de cette consigne peut être fait après que la variable de comptage ait atteint une certaine valeur, par exemple 5.

Dans un mode de réalisation, le serveur 20 peut déclencher une authentification biaisée du terminal-client 10 auprès du serveur 20, de sorte que le terminal-client 10 se comporte comme un terminal authentifié. L'utilisateur frauduleux ignore alors que l'authentification a été un échec. Le serveur 20 peut alors surveiller les agissements du terminal-client 10, ou lui donner accès à des données faussées par exemple.

Dans un mode de réalisation, le serveur 20 détruit des données confidentielles qu'il stocke dans sa mémoire 22, comme par exemple des données relatives à un ou plusieurs utilisateurs légitimes du terminal client.

Dans un mode de réalisation, le serveur 20 génère une consigne de destruction des données relatives à l'utilisateur légitime stockées dans la mémoire 12 du terminal-client 10.

Dans un mode de réalisation : l'encodage GEN et le décodage REP sont effectués avec plusieurs clés à la fois. Le procédé de génération de clé inclue alors une étape de sélection de la « bonne » clé en fonction du serveur associé. On définit ainsi une pluralité de serveurs et/ou de ressources associées au(x) serveur(s), et à chaque serveur et/ou ressources respectifs, est associé une clé légitime pour le contrôle d'accès.

Par exemple, pour le *secure sketch,* le mot de code c est obtenu comme le mot de code dérivant de $KI_1 || KI_2 || .... || KI_n$ (ou || correspond à l'opérateur de concaténation). Par exemple, $KI_1$ sera utilisé pour un premier serveur et/ou ressource, et $KI_2$ pour le deuxième serveur et/ou ressource, etc...

Après l'étape de décodage E2, une étape de sélection est mise en oeuvre pour récupérer la clé générée souhaitée. Cette étape de sélection comprend avantageusement une déconcaténation de la clé obtenue $K'_{conc} = K'_1 || K'_2 || ...|| K'_n$ pour récupérer les clés $K'_i$ qui la constituent. La « bonne » clé sélectionnée est ensuite utilisée dans le cadre d'un contrôle d'accès avec le serveur correspondant (étape E3).

Ce mode de réalisation permet au terminal-client d'échanger avec plusieurs serveurs et/ou ressources d'un serveur en gardant une procédure de cryptage commune.

Ce mode de réalisation est compatible entre autres avec le chiffrement mielleux, qui est alors appliqué sur $KI_1 || KI_2 || ... KL_n$.

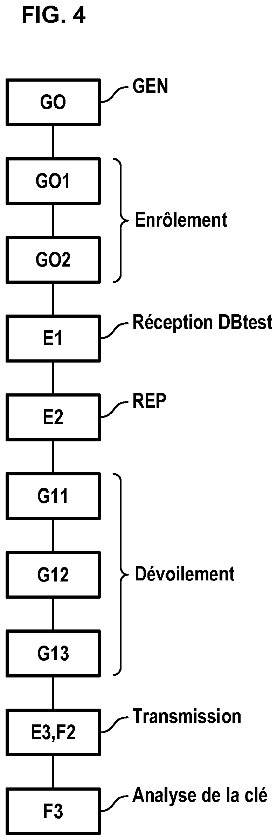

A présent, comme mentionné précédemment, un mode de réalisation particulier à l'aide d'une mise en gage de Pedersen, *Pedersen's commitment* va être décrite, en relation avec la **figure 4** et la référence [CP], et plus précisément la référence [CERIAS].

La mise en gage de Pedersen comprend deux phases : une phase d'enrôlement (*commitment*) et une phase de dévoilement (*revealing*).

La phrase d'enrôlement est mise en oeuvre préalablement au procédé E de génération de clé cryptographique.

Dans une première étape G01, le terminal-client génère et stocke une valeur aléatoire r, puis, dans une deuxième étape G02, il génère une mise en gage MG permettant de ne pas divulguer la clé légitime KI au serveur :

$$MG(r, Kl) = c(r, Kl) = g^{Kl}h^r$$

où g et h sont tels que $\log_g(h)$ n'est pas connu. KI et r correspondent à s et t en partie 3 de [CP], et à x et r dans [CERIAS].

Cette mise en gage MG est ensuite envoyée au serveur 20 qui la stocke sur sa mémoire 22.

La phase de dévoilement se fait si un procédé d'authentification F est déclenché.

Préalablement à l'étape E3, F2 de transmission de la clé cryptographique générée K', qui est ici masquée à l'aide de la valeur r, le terminal-client 10 et le serveur 20 échangent différentes données (cf. les données dépendantes de la clé, citées précédemment).

Dans une sous-étape G11, le terminal-client 10 calcule et envoie au serveur 20 :

$$A_1.A_2 = g^{a_1}.h^{a_2}$$

Où $a_1$ et $a_2$ sont notés y et s dans [CERIAS] et sont des valeurs aléatoires.

Dans une sous-étape G12, le serveur 20 génère et envoie un aléa c au terminal-client 10 (aussi noté c dans [CERIAS]).

Dans une sous-étape G13, le terminal-client 10 calcule à l'aide notamment la clé cryptographique générée K' par le procédé de décodage E2.

$$y_1 = a_1 + K'.c \text{ et } y_2 = a_2 + r.c$$

L'envoi de ces données avec $A_1.A_2$ correspond à la preuve de connaissance de K'.

A cette étape, la clé K' devient masquée.

Ensuite, à l'étape de transmission E3, le terminal-client 10 envoie y1 et y2 au serveur 20.

Enfin, l'étape d'analyse F3 la clé F3 comprend la vérification suivante :

$$g^{y_1}h^{y_2} = MG^c A_1 A_2$$

Cette égalité est vérifiée si K'=KI.

Un telle mise en gage garantit une authentification avec une divulgation nulle de r et de K'.

D'autres schémas de mise en gage peuvent être envisagés, comme une mise en gage de KI en stockant la valeur $g^{Kl}$ puis la preuve de connaissance de Schnorr (voir [SCH]).

Plus généralement, l'authentification peut comprendre un protocole à divulgation nulle de connaissance, illustré par la mise en gage de Pedersen.

Un mode de réalisation complémentaire pour les échanges entre le serveur et le terminal-client utilise une signature électronique, telle que dans FIDO, ou bien en utilisant ECDSA ou RSA.

REFERENCES :

[CRYBIO] : "Biometric Encryption Chapter from the Encyclopedia of Biometrics", de Cavoukian et Stoianov.

[WEAK] : "Privacy Weaknesses in Biometric Sketches" de Simoens, Tuyls et Preneel.

[PROBE] : « ECDSA Key Extraction from Mobile Devices via Nonintrusive Physical Side Channels » de Genkin et al.

[FCS] : « Theoretical and Practical Boundaries of Binary Secure Sketches", de Bringer et al.

[HDS] : "(Practical Biometric Authentication with Template Protection », de Tuyls et al.

[FV] : « A Fuzzy Vault Scheme » de Juels et al.

[FVDEC] : "Algebraic soft-decision decoding of Reed-Solomon codes" de Koetter et al.

[FC] : "Fuzzy Extractors: How to Generate Strong Keys from Biométries and Other Noisy Data", de Dodis et al.

[HE] : "Honey Encryption: Security Beyond the Brute-Force Bound" de Juels et al.

[CP]: "Non-interactive and information-theoretic secure verifiable secret sharing", de Pedersen.

[CERIAS]: CERIAS Tech Report 2008-28 Privacy-Preserving Management of Transactions' Receipts by Federica Paci, Ning Shang,

Elisa Bertino, Sam Kerr, Kevin Steuer, Jr., Jungha Woo Center for Education and Research Information Assurance and Security Purdue University, West Lafayette, IN 47907-2086.

[SCH]: Schnorr; "Efficient identification and signatures for smart cards". In CRYPTO '89"

## Revendications

**1.** Procédé de génération d'une clé cryptographique pour la mise en oeuvre d'un procédé de contrôle d'accès à une ressource d'un serveur (20) par un terminal-client (10),

le procédé étant mis en oeuvre par le terminal-client (10), ledit terminal étant configuré pour communiquer avec le serveur (20),
le terminal-client (10) comprenant une mémoire (14) dans laquelle est stockée une donnée de référence (Dref) obtenue par l'application d'un procédé d'encodage à une donnée biométrique de référence (DBref) et à une clé cryptographique légitime (KI) permettant d'authentifier le terminal-client (10) auprès du serveur (20) lors d'un contrôle d'accès, la donnée de référence (Dref) stockée dépendant d'un code correcteur d'erreur, le code correcteur d'erreur étant obtenu à partir de la clé cryptographique légitime (KI),
le procédé comprenant les étapes suivantes:

- (E1) réception d'une donnée biométrique test (DBtest),
- (E2) application d'un procédé de décodage à la donnée biométrique test (DBtest) et la donnée de référence (Dref) stockée, ledit décodage comprenant la mise en oeuvre d'un procédé de décodage d'erreur, pour obtenir une clé cryptographique générée (K') telle que :

si la donnée biométrique test (DBtest) correspond à la donnée biométrique de référence (DBref), la clé cryptographique générée (K') est la clé cryptographique légitime (KI),
sinon, la clé cryptographique générée (K') est une clé d'authentification cryptographique illégitime (Ki) ne permettant pas l'authentification du terminal-client (10) auprès du serveur (20) lors d'un contrôle d'accès,
le procédé de décodage générant ainsi une clé cryptographique (K') quelle que soit la donnée biométrique test (BDtest), et

- (E3) utilisation de la clé cryptographique générée (K') pour la mise en oeuvre d'un procédé de contrôle d'accès (F3) à une ressource du serveur (20) par le terminal client (10), de sorte que les échanges d'informations entre le terminal-client (10) et le serveur (20) ne se font pas uniquement si la clé cryptographique légitime (KI) est générée.

**2.** Procédé selon la revendication 1, comprenant en outre une étape préliminaire (E0) de génération de la donnée biométrique test (DBtest), soit par acquisition à l'aide de moyens d'acquisition de donnée biométrique (18), soit par génération numérique.

3. Procédé selon l'une quelconque des revendications 1 ou 2, dans lequel le procédé d'encodage est du type « *secure sketch* », tel qu'un *Fuzzy Commitment Scheme,* ou du type *Helper Data System,* ou du type *Fuzzy Vault* par exemple avec des codes de Reed-Solomon.

4. Procédé selon l'une quelconque des revendications 1 à 3, dans lequel le procédé de décodage d'erreur est un procédé de décodage souple, de préférence avec un nombre limité d'itération, par exemple par un nombre limite ou par un critère de qualité d'arrêt.

5. Procédé selon l'une quelconque des revendications 1 à 4, dans lequel la clé cryptographique légitime (KI) présente un format adapté pour l'utilisation de la clé dans un protocole de contrôle d'accès par authentification mis en oeuvre entre le terminal-client (10) et un serveur (20), et le procédé de décodage est adapté pour que la clé cryptographique illégitime (Ki) ait le format de la clé cryptographique légitime (KI).

6. Procédé selon l'une quelconque des revendications 1 à 5, dans lequel le procédé de décodage (REP) et le procédé d'encodage (ENC) comprennent des étapes de chiffrement et déchiffrement mielleux (*honey encryption*).

7. Procédé selon l'une quelconque des revendications précédentes, dans lequel le procédé d'encodage est mis en oeuvre sur une pluralité de clés légitimes concaténées ($KI_1 \| KI_2 \| ... \| KI_n$), les clés légitimes permettant d'authentifier le terminal-client (10) auprès de plusieurs serveurs et/ou ressources respectifs lors d'un contrôle d'accès, et dans lequel le procédé de décodage permet l'obtention d'une clé générée concaténée ($K'_{conc}$) comprenant une pluralité de clés générées concaténée entre elles ($K'_1 \| K'_2 \| ... \| K'_n$), le procédé comprenant avantageusement une étape de sélection d'une des clés générées parmi la pluralité des clés générées ($K'_1, , K'_2, K'_n$) pour son utilisation dans un procédé de contrôle d'accès au serveur et/ou une ressource associé à la clé légitime (KI) qui a permis la génération de ladite clé générée ($K'$).

8. Procédé selon l'une quelconque des revendications précédentes, dans lequel la correspondance entre les deux données biométriques signifie que la distance entre les deux données biométriques est inférieure à un seuil donné.

9. Produit programme d'ordinateur, comprenant des instructions de code pour la mise en oeuvre d'un procédé selon l'une des revendications précédentes, lorsqu'il est mis en oeuvre par un calculateur (16).

10. Unité de calcul (12), comprenant une mémoire (14), un calculateur (16), et une interface de communication (11) avec un serveur (20), **caractérisée en ce qu'**elle est adaptée pour mettre en oeuvre le procédé selon l'une des revendications 1 à 8, ladite unité de calcul étant un dispositif personnel à un individu de type téléphone mobile, tablette numérique, ou encore ordinateur personnel.

11. Procédé de contrôle d'accès d'un terminal-client (10) à une ressource d'un serveur (20), ledit procédé comprenant les étapes suivantes :

- (F1) mise en oeuvre d'un procédé de génération d'une clé cryptographique selon l'une quelconque des revendications 1 à 8,
- (F2) réception par le serveur (20) de la clé cryptographique générée (K') ou de données dépendantes de la clé cryptographique générée,
- (F3) analyse de la clé cryptographique générée (K') ou desdites données dépendantes de la clé cryptographique générée par le serveur (20):

si la clé est une clé légitime (KI), authentification du terminal-client (10) auprès du serveur (20) et accès du terminal client à la ressource du serveur,
si la clé est une clé illégitime (Ki), échec de l'authentification du terminal-client (10) auprès du serveur (20) et mise en oeuvre d'un procédé (F4) d'alerte indiquant que la donnée biométrique de test (DBtest) ne correspond pas à la donnée biométrique de référence (DBref).

12. Procédé selon la revendication 11, dans lequel le procédé d'alerte (F5) comprend au moins une des étapes suivantes :

- stockage du nombre d'itérations de réceptions de clés illégitimes (Ki), et/ou
- envoi d'une consigne de verrouillage du terminal-client (10), et/ou
- authentification biaisée du terminal-client (10) auprès du serveur (20), de façon à pouvoir surveiller ledit terminal-client (10), et/ou
- destruction des données stockées sur le terminal-client (10) et/ou sur le serveur (20), et/ou,
- envoi au terminal-client (10) d'une consigne de ré-acquisition de données biométriques test (BDtest).

13. Procédé selon l'une quelconque des revendications 11 ou 12, comprenant la mise en oeuvre d'un protocole de preuve de connaissance à divulgation nulle de connaissance.

14. Procédé selon l'une quelconque des revendications 11 à 13, dans lequel les échanges entre le terminal-client et le serveur comprennent la mise en oeuvre d'une signature électronique, tel que FIDO ou ECDSA ou encore RSA.

15. Procédé selon l'une quelconque des revendications 11 à 14, mettant en oeuvre une mise en gage selon Pedersen comprenant une phrase d'enrôlement dans laquelle

> le terminal-client (10) stocke une grandeur aléatoire r,
> le terminal-client (10) génère une mise en gage MG sous la forme $MG(r,KI) = g^{KI}h^r$ et l'envoie au serveur (20) qui la stocke, où KI est la clé légitime, et g et h sont tels que $\log_g(h)$ n'est pas connu,
> et comprenant une phase de dévoilement, dans laquelle, préalablement à l'étape de transmission de la clé (E3), les sous-étape suivantes sont mises en œuvre :
> le terminal-client (10) envoie au serveur (20) :

$$A_1.A_2 = g^{a_1}.h^{a_2}$$

> le serveur (20) génère et envoie un aléa c au terminal-client (10), le terminal-client (10) calcule

$$y_1 = a_1 + K'.c \text{ et } y_2 = a_2 + r.c$$

> où K' est la clé cryptographique générée par le procédé de décodage (E2, F1) et $a_1$ et $a_2$ sont des valeurs aléatoires,
> l'étape de transmission (E3) comprend l'envoi de $y_1$ et $y_2$ au serveur (20),

> l'étape d'analyse de la clé (F3) comprend la vérification suivante :

$$g^{y_1}h^{y_2} = MG^c A_1 A_2$$

**Patentansprüche**

1. Verfahren zur Erzeugung eines kryptografischen Schlüssels für die Implementierung eines Verfahrens zur Zugangskontrolle auf eine Ressource eines Servers (20) durch ein Client-Endgerät (10),

wobei das Verfahren durch das Client-Endgerät (10) implementiert wird, wobei das Endgerät so konfiguriert ist, dass es mit dem Server (20) kommuniziert,

wobei das Client-Endgerät (10) einen Speicher (14) umfasst, in dem Referenzdaten (Dref) gespeichert sind, die durch die Anwendung eines Codierungsverfahrens auf biometrische Referenzdaten (DBref) und einen legitimen kryptografischen Schlüssel (KI) erhalten werden, der es ermöglicht, das Client-Endgerät (10) bei einer Zugangskontrolle gegenüber dem Server (20) zu authentifizieren, wobei die gespeicherten Referenzdaten (Dref) von einem Fehlerkorrekturcode abhängig sind, wobei der Fehlerkorrekturcode aus dem legitimen kryptografischen Schlüssel (KI) erhalten wird,

wobei das Verfahren die folgenden Schritte umfasst:

- (E1) Empfangen von biometrischen Testdaten (DBtest),
- (E2) Anwenden eines Decodierungsverfahrens auf die biometrischen Testdaten (DBtest) und die gespeicherten Referenzdaten (Dref), wobei die Decodierung die Implementierung eines Fehlerdecodierungsverfahrens umfasst, um einen erzeugten kryptografischen Schlüssel (K') zu erhalten, der so beschaffen ist, dass:

> wenn die biometrischen Testdaten (DBtest) mit den biometrischen Referenzdaten (DBref) übereinstimmen, der erzeugte kryptografische Schlüssel (K') der legitime kryptografische Schlüssel (KI) ist,
> andernfalls der erzeugte kryptografische Schlüssel (K') ein illegitimer kryptografischer Authentifizierungsschlüssel (Ki) ist, der die Authentifizierung des Client-Endgeräts (10) gegenüber dem Server (20) bei einer Zugangskontrolle nicht ermöglicht,
> wobei das Decodierungsverfahren somit einen kryptografischen Schlüssel (K') unabhängig von den biometrischen Testdaten (BDtest) erzeugt, und

- (E3) Verwendung des erzeugten kryptografischen Schlüssels (K') für die Implementierung eines Verfahrens zur Zugangskontrolle (F3) auf eine Ressource des Servers (20) durch das Client-Endgerät (10), so dass der Informationsaustausch zwischen dem Client-Endgerät (10) und dem Server (20) nicht nur dann erfolgt, wenn der legitime kryptografische Schlüssel (KI) erzeugt wird.

2. Verfahren nach Anspruch 1, das außerdem einen vorbereitenden Schritt (E0) zur Erzeugung der biometrischen Testdaten (DBtest) entweder durch Erfassung mithilfe von Mitteln zur Erfassung biometrischer Daten (18) oder durch digitale Erzeugung umfasst.

3. Verfahren nach einem der Ansprüche 1 oder 2, wobei das Codierungsverfahren vom Typ *"secure sketch"* ist, wie z. B. ein *Fuzzy Commitment Scheme,* oder vom Typ *Helper Data System,* oder vom Typ *Fuzzy Vault,* z. B. mit Reed-Solomon-Codes.

4. Verfahren nach einem der Ansprüche 1 bis 3, wobei das Fehlerdecodierungsverfahren ein flexibles Decodierungsverfahren ist, vorzugsweise mit einer begrenzten Anzahl von Iterationen, z. B. durch eine Grenzzahl oder durch ein Stopp-Qualitätskriterium.

5. Verfahren nach einem der Ansprüche 1 bis 4, wobei der legitime kryptografische Schlüssel (KI) ein Format aufweist, das für die Verwendung des Schlüssels in einem Authentifizierungs-Zugangskontrollprotokoll geeignet ist, das zwischen dem Client-Endgerät (10) und einem Server (20) implementiert ist, und das Decodierungsverfahren so angepasst ist, dass der illegitime kryptografische Schlüssel (Ki) das Format des legitimen kryptografischen Schlüssels (KI) aufweist.

6. Verfahren nach einem der Ansprüche 1 bis 5, wobei das Decodierungsverfahren (REP) und das Codierungsverfahren (ENC) Schritte zur Honey-Verschlüsselung und -Entschlüsselung (*"honey encryption"*) umfassen.

7. Verfahren nach einem der vorhergehenden Ansprüche, bei dem das Codierungsverfahren auf einer Vielzahl von verketteten legitimen Schlüsseln (KI$_1 \parallel$ KI$_2 \parallel ... \parallel$ KI$_n$) implementiert ist, wobei die legitimen Schlüssel es ermöglichen, das Client-Endgerät (10) bei einer Zugangskontrolle bei mehreren jeweiligen Servern und/oder Ressourcen zu authentifizieren, und wobei das Decodierungsverfahren das Erhalten eines verketteten erzeugten Schlüssels (K'$_{conc}$) ermöglicht, der eine Vielzahl von miteinander verketteten erzeugten Schlüsseln (K'$_1 \parallel$ K'$_2 \parallel ... \parallel$ K'$_n$) umfasst, wobei das Verfahren vorteilhafterweise einen Schritt zur Auswahl eines der erzeugten Schlüssel aus der Vielzahl der erzeugten Schlüssel (K'$_1$, K'$_2$, K'$_n$) für seine Verwendung in einem Verfahren zur Zugangskontrolle auf den Server und/oder eine Ressource umfasst, die dem legitimen Schlüssel (KI) zugeordnet ist, der die Erzeugung des erzeugten Schlüssels (K') ermöglicht hat.

8. Verfahren nach einem der vorhergehenden Ansprüche, wobei die Übereinstimmung zwischen den beiden biometrischen Daten bedeutet, dass der Abstand zwischen den beiden biometrischen Daten unter einem bestimmten Schwellenwert liegt.

9. Computerprogrammprodukt, das, wenn es von einem Rechner (16) ausgeführt wird, Codeanweisungen zur Implementierung eines Verfahrens nach einem der vorhergehenden Ansprüche umfasst.

10. Recheneinheit (12), die einen Speicher (14), einen Rechner (16) und eine Kommunikationsschnittstelle (11) zu einem Server (20) umfasst, **dadurch gekennzeichnet, dass** sie zur Implementierung des Verfahrens nach einem der Ansprüche 1 bis 8 geeignet ist, wobei die Recheneinheit ein persönliches Gerät für eine Person, vom Typ Mobiltelefon, Tablet oder auch Personalcomputer ist.

11. Verfahren zur Zugangskontrolle eines Client-Endgeräts (10) auf eine Ressource eines Servers (20), wobei das Verfahren die folgenden Schritte umfasst:

  - (F1) Implementierung eines Verfahrens zur Erzeugung eines kryptografischen Schlüssels nach einem der Ansprüche 1 bis 8,
  - (F2) Empfangen des erzeugten kryptografischen Schlüssels (K') oder von Daten, die von dem erzeugten kryptografischen Schlüssel abhängen, durch den Server (20),
  - (F3) Analyse des erzeugten kryptografischen Schlüssels (K') oder der Daten, die von dem erzeugten kryptografischen Schlüssel abhängen, durch den Server (20):

    Wenn der Schlüssel ein legitimer Schlüssel (KI) ist, Authentifizierung des Client-Endgeräts (10) gegenüber dem Server (20) und Zugang des Client-Endgeräts zur Ressource des Servers,
    wenn der Schlüssel ein illegitimer Schlüssel (Ki) ist, Fehlschlagen der Authentifizierung des Client-Endgeräts (10) gegenüber dem Server (20) und Implementierung eines Warnverfahrens (F4), das angibt, dass die biometrischen Testdaten (DBtest) nicht mit den biometrischen Referenzdaten (DBref) übereinstimmen.

12. Verfahren nach Anspruch 11, wobei das Warnverfahren (F5) mindestens einen der folgenden Schritte umfasst:

  - Speichern der Anzahl von Iterationen des Empfangs von illegitimen Schlüsseln (Ki), und/oder
  - Senden einer Anweisung zum Sperren des Client-Endgeräts (10), und/oder

- Bias-Authentifizierung des Client-Endgeräts (10) gegenüber dem Server (20), um das Client-Endgerät (10) überwachen zu können, und/oder
- Vernichtung der auf dem Client-Endgerät (10) und/oder auf dem Server (20) gespeicherten Daten, und/oder
- Senden einer Anweisung zum erneuten Erfassen von biometrischen Testdaten (BDtest) an das Client-Endgerät (10).

13. Verfahren nach einem der Ansprüche 11 oder 12, das die Implementierung eines Zero-Knowledge-Protokolls umfasst.

14. Verfahren nach einem der Ansprüche 11 bis 13, bei dem der Austausch zwischen dem Client-Endgerät und dem Server die Implementierung einer elektronischen Signatur, wie FIDO oder ECDSA oder auch RSA, umfasst.

15. Verfahren nach einem der Ansprüche 11 bis 14, das ein Commitment nach Pedersen implementiert, das einen Anmeldesatz umfasst, in dem

das Client-Endgerät (10) eine Zufallsgröße r speichert,
das Client-Endgerät (10) ein Commitment MG in der Form $MG(r,KI) = g^{KI} h^r$ erzeugt und an den Server (20) sendet, der es speichert, wobei KI der legitime Schlüssel ist und g und h so beschaffen sind, dass $\log_g(h)$ unbekannt ist,
und eine Reveal-Phase umfasst, in der vor dem Schritt der Schlüsselübertragung (E3) die folgenden Unterschritte durchgeführt werden:

das Client-Endgerät (10) sendet an den Server (20):

$$A_1.A_2 = g^{a1}.h^{a2}$$

Der Server (20) erzeugt und sendet eine Zufallszahl c an das Client-Endgerät (10), das Client-Endgerät (10) berechnet

$$y_1 = a_1 + K'.\ c \text{ und } y_2 = a_2 + r.c$$

wobei K' der kryptographische Schlüssel ist, der durch das Decodierungsverfahren (E2, F1) erzeugt wird, und $a_1$ et $a_2$ Zufallswerte sind,
der Übertragungsschritt (E3) das Senden von $y_1$ et $y_2$ an den Server (20) umfasst,
der Schritt der Schlüsselanalyse (F3) die folgende Überprüfung umfasst:

$$g^{y1}\ h^{y2} = MG^c A_1 A_2$$

**Claims**

1. A method for generating a cryptographic key for implementing a method for controlling access to a resource of a server (20) by a client terminal (10),

with the method being implemented by the client terminal (10), said terminal being configured to communicate with the server (20),
the client terminal (10) comprising a memory (14) wherein is stored a reference datum (Dref) obtained by applying an encoding method to a reference biometric datum (DBref) and to a legitimate cryptographic key (KI) enabling the client terminal (10) to be authenticated with the server (20) during an access control, the stored reference datum (Dref) depending on an error correcting code, the error correcting code being obtained from the legitimate cryptographic key (KI),
the method comprising the following steps:

- (E1) receiving a test biometric datum (DBtest),
- (E2) applying a decoding method to the test biometric datum (DBtest) and the stored reference datum (Dref), said decoding comprising the implementation of an error decoding method, to obtain a generated cryptographic key (K') such as:

if the test biometric datum (DBtest) corresponds to the reference biometric datum (DBref), the generated cryptographic key (K') is the legitimate cryptographic key (KI),
otherwise, the generated cryptographic key (K') is an illegitimate cryptographic authentication key (Ki) that does not enable authentication of the client terminal (10) with the server (20) during an access control,
the decoding method thus generating a cryptographic key (K') regardless of the test biometric datum (BDtest), and

- (E3) using the generated cryptographic key (K') for the implementation of an access control method (F3) to a server resource (20) by the client terminal (10), so that the exchange of information between the client terminal (10) and the server (20) does not take place if only the legitimate cryptographic key (KI) is generated.

**2.** The method according to claim 1, further comprising a preliminary step (E0) of generating the test biometric datum (DBtest), either by acquisition using means of biometric datum acquisition (18), or by digital generation.

**3.** The method according to any one of claims 1 or 2, wherein the encoding method is of a *"secure sketch"* type, such as a *Fuzzy Commitment Scheme,* or of the *Helper Data System* type, or of the *Fuzzy Vault* type, for example, with Reed-Solomon codes.

**4.** The method according to any one of claims 1 to 3, wherein the error decoding method is a flexible decoding method, preferably with a limited number of iterations, for example, by a limit number or by a stop quality criterion.

**5.** The method according to any one of claims 1 to 4, wherein the legitimate cryptographic key (KI) has a format adapted for the use of the key in an access control protocol through authentication implemented between the client terminal (10) and a server (20), and the decoding method is adapted so that the illegitimate cryptographic key (Ki) has the format of the legitimate cryptographic key (KI).

**6.** The method according to any one of claims 1 to 5, wherein the decoding method (REP) and the encoding method (ENC) comprise steps of honey encryption and decryption.

**7.** The method according to any one of the previous claims, wherein the encoding method is implemented on a plurality of concatenated legitimate keys ($KI_1 \parallel KI_2 \parallel .... \parallel KI_n$), the legitimate keys enabling authentication of the client terminal (10) with several respective servers and/or resources during an access control, and wherein the decoding method enables a concatenated generated key ($K'_{conc}$) to be obtained comprising a plurality of generated keys concatenated with one another ($K'_1 \parallel K'_2 \parallel ... \parallel K'_n$), the method advantageously comprising a step of selecting one of the keys generated from among the plurality of keys generated ($K'_1$, $K'_2$, $K'_n$) for its use in an access control method to the server and/or a resource associated with the legitimate key (KI) that enabled the generation of said generated key (K').

**8.** The method according to any one of the previous claims, wherein the correspondence between the two biometric data means that the distance between the two biometric data is less than a given threshold.

**9.** A computer program product, comprising code instructions for implementing a method according to one of the previous claims, whereupon it is implemented by a computer (16).

**10.** A calculation unit (12), comprising a memory (14), a calculator (16), and a communication interface (11) with a server (20), **characterized in that** it is adapted for implementing the method according to one of claims 1 to 8, said calculation unit being a personal device of an individual of the cell phone type, digital tablet type, or even personal computer type.

**11.** A method for controlling access by a client terminal (10) to a resource of a server (20), said method comprising the following steps:

- (F1) implementing a method for generating a cryptographic key according to any one of claims 1 to 8,
- (F2) receiving by the server (20) the generated cryptographic key (K') or data dependent on the generated cryptographic key,
- (F3) analyzing the generated cryptographic key (K') or said data dependent on the cryptographic key generated by the server (20):

if the key is a legitimate key (KI), authenticating the client terminal (10) with the server (20) and accessing the client terminal to the server resource,
if the key is an illegitimate key (Ki), failure authenticating the client terminal (10) with the server (20) and implementing an alert method (F4) indicating that the test biometric datum (DBtest) does not correspond to the reference biometric datum (DBref).

**12.** The method according to claim 11, wherein the alert method (F5) comprises at least one of the following steps:

- storing the number of iterations of illegitimate key (Ki) receipts, and/or
- sending a set value for locking the client terminal (10), and/or
- perform a biased authentication of the client terminal (10) with the server (20), so as to be able to monitor said client terminal (10), and/or
- destructing data stored on the client terminal (10) and/or on the server (20), and/or,
- sending to the client terminal (10) of a set value for re-acquiring test biometric data (BDtest).

**13.** The method according to any one of claims 11 or 12, comprising the implementation of a knowledge protocol for a zero-knowledge proof.

**14.** The method according to any one of claims 11 to 13, wherein the exchanges between the client terminal and the server comprise the implementation of an electronic signature, such as FIDO or ECDSA or RSA.

**15.** The method according to any one of claims 11 to 14, implementing a Pedersen commitment comprising an enrollment phase wherein

the client terminal (10) stores a random quantity r,

the client terminal (10) generates a commitment MG in the form of $MG(r,KI) = g^{KI}h^r$ and sends it to the server (20), which stores it, where KI is the legitimate key, and g and h are such that $\log_g(h)$ is unknown,

and comprising a revealing phase, wherein, prior to the key transmission step (E3), the following sub-steps are implemented:

the client terminal (10) sends to the server (20):

$$A_1.A_2 = g^{a1},h^{a2}$$

the server (20) generates and sends a random variable c to the client terminal (10),

the client terminal (10) calculates

$$y_1 = a_1 + K'.\ c \text{ and } y_2 = a_2 + r.c$$

where K' is the cryptographic key generated by the decoding method (E2, F1) and $a_1$ and $a_2$ are random values,

the transmission step (E3) comprises sending $y_1$ and $y_2$ to the server (20),

the key analysis step (F3) comprises the following verification:

$$g^{y1}\ h^{y2} = MG^c A_1 A_2$$

**FIG. 1**

EP 3 280 089 B1

# FIG. 2

DBref

Kl → GEN → P=GEN(DBref,Kl)=Dref

GO

DBtest ──E1──→ REP ⌒ E2

E,F1

K'

E3,F2

**20**

F3 ⌒    ⌒ F3

K'=Kl            K'=Ki

V                X

F4

F

# FIG. 3

DBref

$b$

$c=Kl \longrightarrow$ | $c \oplus b$ | $\longrightarrow$ SSK(b,Kl)

DBtest $\longrightarrow b' \longrightarrow$ | $c \oplus b \oplus b'$ |

$c'$

## FIG. 4

```
┌────────┐
│   GO   │──⌐ GEN
└────────┘

┌────────┐   ⌐
│  GO1   │   │
└────────┘   │
             ├─ Enrôlement
┌────────┐   │
│  GO2   │   │
└────────┘   ⌐

┌────────┐
│   E1   │──⌐ Réception DBtest
└────────┘

┌────────┐
│   E2   │──⌐ REP
└────────┘

┌────────┐   ⌐
│  G11   │   │
└────────┘   │
             │
┌────────┐   │
│  G12   │   ├─ Dévoilement
└────────┘   │
             │
┌────────┐   │
│  G13   │   ⌐
└────────┘

┌────────┐
│  E3,F2 │──⌐ Transmission
└────────┘

┌────────┐
│   F3   │──⌐ Analyse de la clé
└────────┘
```

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016164682 A1

**Littérature non-brevet citée dans la description**

- **CAVOUKIAN ; STOIANOV.** *Biometric Encryption Chapter from the Encyclopedia of Biometrics*
- **SIMOENS ; TUYLS ; PRENEEL.** *Privacy Weaknesses in Biometric Sketches*
- **GENKIN.** *ECDSA Key Extraction from Mobile Devices via Nonintrusive Physical Side Channels*
- **BRINGER.** *Theoretical and Practical Boundaries of Binary Secure Sketches*
- **TUYLS.** *Practical Biometric Authentication with Template Protection*
- **JUELS.** *A Fuzzy Vault Scheme*
- **KOETTER.** *Algebraic soft-decision decoding of Reed-Solomon codes*
- **DODIS.** *Fuzzy Extractors: How to Generate Strong Keys from Biométries and Other Noisy Data*
- **JUELS.** *Honey Encryption: Security Beyond the Brute-Force Bound*
- **PEDERSEN.** *Non-interactive and information-theoretic secure verifiable secret sharing*
- CERIAS Tech Report 2008-28 Privacy-Preserving Management of Transactions' Receipts. Federica Paci
- **SCHNORR.** Efficient identification and signatures for smart cards. *CRYPTO '89*